Europäisches Patentamt

European Patent Office

Office européen des brevets

(19)

(11) Numéro de publication: **0 016 714**
**B1**

(12) **FASCICULE DE BREVET EUROPEEN**

(45) Date de publication du fascicule du brevet: **31.08.83**

(51) Int. Cl.³: **H 02 P 7/68, B 65 H 54/38**

(21) Numéro de dépôt: **80420029.3**

(22) Date de dépôt: **04.03.80**

(54) **Installation perfectionnée pour la commande des variations de vitesse des boîtes à cames d'une machine textile.**

(30) Priorité: **16.03.79 FR 7907221**

(43) Date de publication de la demande:
**01.10.80 Bulletin 80/20**

(45) Mention de la délivrance du brevet:
**31.08.83 Bulletin 83/35**

(84) Etats contractants désignés:
**CH DE GB IT**

(56) Documents cités:
**DE - A - 1 513 331**
**FR - A - 1 368 367**
**FR - A - 1 544 261**

(73) Titulaire: **Société dite: ASA S.A. (société anonyme)**
**76, boulevard du 11 Novembre**
**F-69100 Villeurbanne (FR)**

(72) Inventeur: **Derail, Yves**
**Le Chantilly 38, rue Rabelais**
**F-42300 Roanne (FR)**

(74) Mandataire: **Laurent, Michel et al,**
**Bureaux Chalin A1 20, rue Louis Chirpaz Boîte Postale 32**
**F-69130 Lyon-Ecully (FR)**

Courier Press, Leamington Spa, England.

EP 0 016 714 B1

## Installation perfectionnée pour la commande des variations de vitesse des boîtes à cames d'une machine textile.

La présente invention concerne un perfectionnement apporté à la commande des variations de vitesse des boites à cames d'une machine textile selon le préambule de la revendication 1.

Il est connu que, lors du renvidage de fils textiles, il est impératif de faire varier la vitesse des dispositifs de va-et-vient permettant de distribuer le fil sur le support d'enroulement si l'on veut éviter qu'il se produise des images, c'est-à-dire que les spires de fils se superposent les unes aux autres.

Pour cela, on utilise soit des brouilleurs mécaniques, soit des variateurs permettant de moduler (signaux périodiques symétriques, triangle par exemple) la vitesse moyenne de rotation des moyens d'entraînement des boites à cames en général, de plus ou moins 7,5 %.

En conséquence, il est donc nécessaire d'accélérer et de freiner périodiquement les moyens d'entraînement des va-et-vient distributeurs de fils.

Si les solutions utilisées jusqu'à ce jour donnent satisfaction, elles ne sont pas adaptées aux machines textiles modernes dans lesquelles les vitesses de renvidage sont de plus en plus élevées. Cela est notamment le cas pour les machines de texturation par fausse torsion, où, en quelques années, les vitesses de renvidage sont passées de 400 mètres par minute à 1 000 mètres par minute.

La présente invention a pour but un perfectionnement apporté à la commande des variations de vitesses de boites à cames des machines textiles possédant deux faces symétriques comportant chacune le même nombre de positions.

Ce but est obtenu par les caractéristiques exposées dans la partie caractérisante de la revendication 1.

L'invention et les avantages qu'elle apporte seront cependent mieux compris grâce à l'exemple de réalisation donné ci-après, à titre indicatif, mais non limitatif, et qui est illustré par le schéma annexé.

Cette installation se compose de deux moteurs (1), (2), chacun des moteurs commandant les boites à cames (non représentées) de l'une des faces de la machine, ces moteurs étant à courant continu, du type à excitation séparée. L'alimentation commune d'induit des deux moteurs (1) et (2) est réalisée par l'intermédiaire d'un variateur d'induit triphasé (3) fournissant aux induits une tension constante définissant la vitesse moyenne desdits moteurs.

Conformément à l'invention, les variations de vitesse desdits moteurs sont modulées en opposition de phases, par variation de flux dans chacun d'eux, ces variations étant obtenues au moyen d'une générateur (4) de tension en dents de scie, dont l'alimentation (5) est réalisée sous une tension constante identique à celle fournie au variateur d'induit (3). Bien entendu, on pourrait utiliser tout autre élément équivalent à un générateur de tension en dents de scie sans sortir du cadre de l'invention; par exemple, on pourrait utiliser un générateur de signaux sinusoïdaux ou tout autre générateur pouvant donner des signaux symétriques. Ce générateur (4) comporte deux sorties (6), (7) fournissant à chaque moteur (1), (2) une tension modulée en opposition de phases par l'intermédiaire de deux variateurs d'inducteurs (8), (9) dont les tensions variables sont comparées aux tensions données par deux dynamo-tachymétriques (10), (11), afin de communiquer par variation de flux une vitesse des moteurs (1), (2), similaires aux tensions de référence.

De préférence, un shunt (12—13) est prévu dans chaque circuit d'alimentation (14—15) des moteurs (1—2) et fait partie d'une boucle de contre-réaction améliorant la stabilité.

Ces shunts (12—13) sont isolés galvaniquement des variateurs (8—9) par l'intermédiaire de coupleurs (16—17).

Le fonctionnement d'une telle installation est le suivant: une tension de contrôle continue constante définissant la valeur moyenne de la vitesse est envoyée simultanément sur le générateur (4) et le variateur triphasé d'induit (3). Ce variateur triphasé (3) fournit aux induits des deux moteurs (1—2) une tension constante définissant ainsi la vitesse moyenne.

Lautre alimentation (5) de la tension de contrôle va au générateur (4) qui envoie deux consignes de vitesse variable en dents de scie (6—7), une pour chaque variateur d'inducteur (8—9). Ces deux consignes (tension) ont leurs variations en opposition de phase et sont comparées aux tensions données par les dynamo-tachymétriques (10—11) dans les variateurs d'inducteur (8—9), afin d'obtenir une variation de flux et par suite une vitesse des moteurs similaires aux tensions de référence.

La stabilité de l'ensemble est améliorée au moyen d'un shunt (12—13) sur le courant d'induit afin d'obtenir une boucle de contre-réaction.

De préférence, une isolation galvanique (16—17) est prévue entre le shunt et chaque variateur d'inducteur (8—9), cette isolation étant réalisée par exemple à l'aide d'un coupleur tel que celui commercialisé sous la référence "carte d'isolement galvanique A 06" de la Société Télémécanique.

Pour une machine de texuration par fausse torsion du type FTF. 90 de la Société A.R.C.T., comportant 216 positions, on utilise une installation ayant les caractéristiques suivantes:

— variateurs d'induit (3): variateur triphasé de 90 ampères, 380 volts,

— moteurs (1, 2): à courant continu du type à excitation séparée de 17 Kilo-watt, 420 volts à l'induit, 190 volts à linducteur,

— variateurs d'inducteur (8—9): variateur monophasé de 16 ampères, 380 volts,

— générateur de tension (4): générateur spécifique réalisé à partir d'un oscillateur triangulaire dont l'amplitude et l'oscillation présentent toujours ±7,5 % de la tension moyenne de référence. Cette oscillation est ajoutée ou soustraite de cette valeur moyenne afin de donner deux sorties en opposition de phase,

— shunts (12, 13): résistances de 5 milliohms,

— dynamo-tachymétriques (10, 11): disposées sur les axes des deux moteurs (1, 2 et reliées électriquement aux deux variateurs d'inducteur, ces dynamos donnant une tension de 60 millivolts par tour par minute.

A l'aide d'une telle installation, il est possible d-obtenir une vitesse maximale du moteur de l'ordre de 3000 tours par minute, cette vitesse variant de plus ou moins 7,5 % pendant une période de 0,8 seconde.

Par rapport aux systèmes antérieurs, une telle solution présente les avantages suivants:

— la linéarité est bonne,

— le matériel employé est absolument standard; ce sont des variateurs de vitesse ordinaires,

— la rapidité de réponse est largement suffisante,

— le prix de revient est plus faible malgré la quantité du matériel.

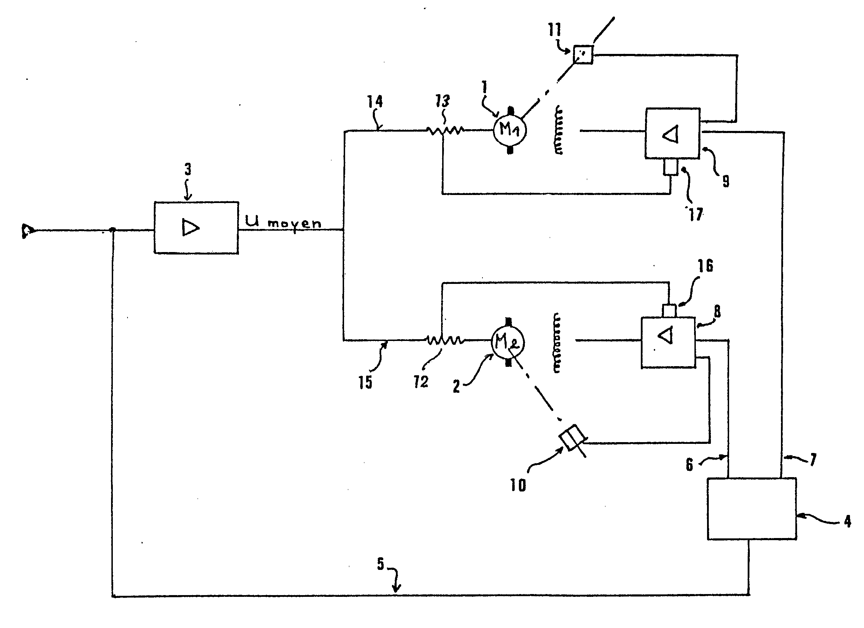

## Revendications

1. Installation perfectionnée pour la commande des variations de vitesse des boites à cames d'une machine textile comportant deux faces symétriques présentant chacune un nombre identique de boites à cames assurant un mouvement de va-et-vient pour le renvidage des fils, les boites à cames de chaque face étant commandées par un moteur associé à des moyens permettant de faire varier selon un cycle déterminé la vitesse dudit moteur, ce qui permet d'obtenir un décalage des spires de fils d'une couche à une autre et évite la formation d'images sur l'enroulement formé, caractérisé par le fait que les moteurs (1, 2) commandant chaque face de la machine sont des moteurs à courant continu du type à excitation séparée et comportent une alimentation commune d'induit fixant leur vitesse moyenne et permettant d'échanger les énergies de freinage, les variations autour de la vitesse moyenne desdits moteurs étant modulées en opposition de phase par variation du flux dans chaque moteur.

2. Installation selon la revendication 1, caractérisée par le fait que l'alimentation commune d'induit des deux moteurs (1, 2) est réalisée par l'intermédiaire d'un variateur d'induit alimenté par une source triphasée (3) contrôlée par un signal de contrôle (5) et fournissant aux induits une tension constante définissant la vitesse moyenne des moteurs,

— les variations de vitesse desdits moteurs, modulées en opposition de phase par variation de flux, sont obtenues au moyen d'un générateur (4) de tension en dents de scie, dont le signal de contrôle (5) est identique à celui fourni au variateur d'induit (3), ce générateur (4) comportant deux sorties (6, 7) fournissant pour chaque moteur (1, 2) une tension de référence modulée en opposition de phase et comparée par l'intermédiaire de deux variateurs d'inducteur (8—9) aux tensions données par deux dynamo-tachymétriques (10, 11) afin de communiquer par variation du flux une vitesse des moteurs (1, 2) similaire aux tensions de référence,

—un shunt (12, 13) est prévu dans chaque circuit d'alimentation d'induit (14, 15) des moteurs (1, 2) et fait partie d'une boucle de contre-réaction améliorant la stabilité, ledit shunt (12, 13) étant isolé galvaniquement des variateurs (8, 9) par l'intermédiaire de coupleurs (17, 18).

## Patentansprüche

1. Einrichtung zum Steuern der Geschwindigkeitsänderungen der Nockengeräte einer Textilmaschine mit zwei symmetrischen Seiten, von denen jede eine gleiche Anzahl von eine Hin- und Herbewegung für das Aufwickeln der Fäden erzeugenden Nockengeräten aufweist, wobei die Nockengeräte jeder Seite durch einen Motor angetrieben sind, der mit Mitteln verbunden ist zur Veränderung seiner Geschwindigkeit nach einem bestimmten Zyklus, wodurch eine Versetzung der Fadenwindungen von einer Lage zur anderen erreicht und das Entstehen von Fadenüberlagerungen auf der hergestellten Wicklung verhindert wird, dadurch gekennzeichnet, daß die Antriebs-Motoren (1, 2) jeder Seite der Maschine fremderregte Gleichstrommotoren sind mit gemeinsamer Speisung der Anker, durch die ihre mittlere Geschwindigkeit festgelegt und ein Austausch der Bremsenergie ermöglicht wird, wobei die Geschwindigkeitsänderungen um die mittlere Geschwindigkeit der Motoren herum gegenphasig moduliert werden durch Veränderung des Flusses in jedem Motor.

2. Einrichtung nach Anspruch 1, dadurch gekennzeichnet, daß die gemeinsame Speisung der Anker der beiden Motoren (1, 2) unter Zwischenschaltung einer Anker-Regeleinrichtung erfolgt, die von einer Drehstromquelle (3) gespeist wird, die durch eine Kontrollsignal (5) kontrolliert wird und den Ankern eine konstante, die mittlere Geschwindigkeit der Motoren bestimmende Spannung liefert, wobei

— die durch Veränderung des Flusses gegenphasig modulierten Geschwindigkeitsänderungen der Motoren mittels eines Sägezahngenerators (4) erreicht werden, dessen Kontrollsignal (5) identisch ist mit dem der Anker-Regeleinrichtung (3) gelieferten Kontrollsignal und der zwei Ausgänge (6, 7) aufweist, die für jeden Motor (1, 2) eine bezugsspannung liefern, die gegenphasig moduliert ist und mittels zweier Erregerwicklungs-Regler (8, 9) mit den von zwei Drehzahlreglern (10, 11) gegebenen Spannung verglichen werden, um durch Variation des Flusses den Motoren (1, 2) eine den Bezugsspannungen entsprechende geschwindigkeit zu erteilen,

— ein Shunt (12, 13) in jedem Anker-Speisestromkreis (14, 15) der Motoren (1, 2) vorgesehen ist, der zu einer die Stabilität verbessernden Gegenkopplungs-Schleife gehört, wobei jeder Shunt (12, 13) von den Reglern (8, 9) unter Zwischenschaltung einer Kupplung (17, 18) galvanisch getrennt ist.

## Claims

1. Improved equipment for controlling the variations in speed of cam-boxes of a textile machine having two symmetric sides, each side having an identical number of cam-boxes which guarantees a back and forth movement for the winding of the threads, the cams of each side being controlled by a motor which is linked by means which vary, according to a predetermined cycle, the speed of said motor, thereby producing a staggering of the thread spools from a layer to the other and avoiding bunching on the formed winding, characterized by the fact that said motors (1, 2) controlling each side of the machine are continuous current motors of a separated excitation type and comprise a common induction source adapted to fix the motors' average speed and to exchange the breaking energy, the variations around the average speed of the said motors being modulated in phase opposition by flux variation in each motor.

2. Equipment according to claim 1, characterized by the fact that the common induction source of said two motors (1, 2) is produced by the intermediary of an induction variator alimented by a triphase source (3), controlled by a control signal (5), which furnishes the induction circuits with a constant voltage which defines the average speed of the motors,

— the speed variations of said motors, modulated in phase opposition by flux variation, are obtained by means of a generator (4) with a sawtooth voltage, whose the control signal (5) is identical to that which is furnished to said induction variator (3), said generator (4) having two outlets (6, 7) which produce, at each motor (1, 2) a reference modulated voltage in phase opposition and compared by the intermediary of two inductor variators (8, 9) to the voltages created by two dynamotachymetrics (10, 11), in order to achieve by flux variation a speed of the motors (1, 2) which is similar to the reference voltages,

— a shunt (12, 13 being disposed into each induction current circuit (14, 15) of the motors (1, 2) and is a part of a counter reaction loop adapted to improve the stability, said shunts (12, 13) being galvanically isolated from said variators (8, 9) by the intermediary of couplers (17, 18).